# EUROPEAN PATENT APPLICATION

(11) **EP 4 753 000 A1**
(43) Date of publication of application: **03.06.2026**
(21) Application number: 25854508.6
(22) Date of filing: 02.07.2025
(51) Int. Cl.: H01M 10/04, H01M 50/186

(54) **SIDE SEALING DEVICE FOR STACK-TYPE ELECTRODE ASSEMBLY**

(30) Priority: 14.08.2024 KR 20240109272
(71) Applicant: LG Energy Solution, Ltd., Seoul 07335 (KR)
(72) Inventor: PARK, Jae Hong, Daejeon 34122 (KR)
(74) Representative: BCKIP Part mbB
(86) International application number: PCT/KR2025/009403
(87) International publication number: WO 2026/038695

(57) **Abstract**

Disclosed is a side sealing apparatus for stacked type electrode assemblies, and more particularly a side sealing apparatus for stacked type electrode assemblies for sealing a side surface of a stacked type electrode assembly having a separator interposed between a first electrode and a second electrode, the side sealing apparatus including a first sealing tool located on one side surface of the stacked type electrode assembly and a second sealing tool located on another side surface of the stacked type electrode assembly, wherein at least one of the first sealing tool or the second sealing tool has a protruding portion and a depressed portion at an inner surface thereof configured to face the side surface of the stacked type electrode assembly.

## Description

### [Technical Field]

This application claims the benefit of priority to Korean Patent Application No. 10-2024-0109272 filed on August 14, 2024, the disclosure of which is incorporated herein by reference in its entirety.

The present invention relates to a side sealing apparatus for stacked type electrode assemblies, and more particularly to a side sealing apparatus for stacked type electrode assemblies configured to seal both side surfaces of a stacked type electrode assembly in which a first electrode, a separator, and a second electrode are alternately stacked.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing process includes a step of inserting an electrode assembly into a pocket portion of a battery case made of a laminate sheet, a step of injecting electrolyte into the battery case, a step of sealing the battery case, and an activation step.

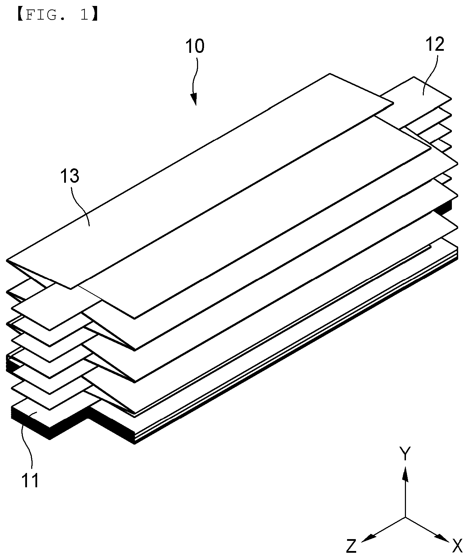

A stacked type electrode assembly, which is a type of electrode assembly, is configured such that a positive electrode and a negative electrode are stacked in the state in which a separator is interposed therebetween. As shown in FIG. 1, in the stacked type electrode assembly, a separator 13 is disposed between a first electrode 11 and a second electrode 12 to prevent electrical short circuit due to physical contact between the first electrode 11 and the second electrode 12.

Generally, the separator 13 is manufactured with horizontal and vertical dimensions greater than those of the first electrode 11 and the second electrode 12.

The stacked type electrode assembly is completed as a single secondary battery through subsequent processes, such as heating and pressing in a height direction, side heating, and packaging.

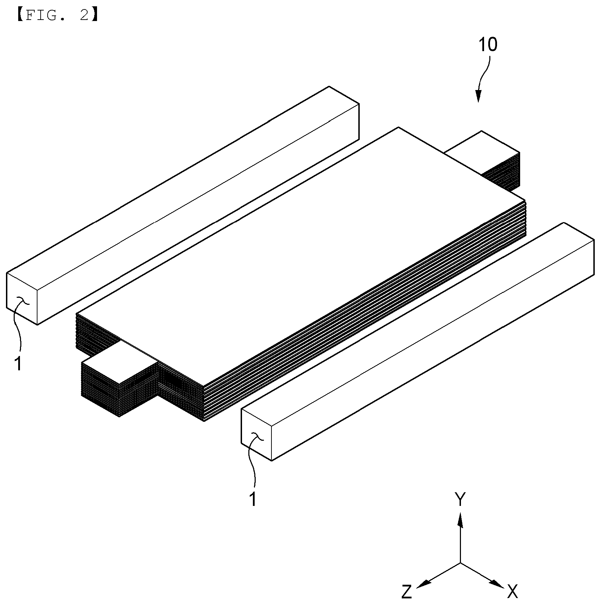

In this regard, a side sealing apparatus for heating side surfaces of an electrode assembly 10 to bond separators to each other for sealing is known. That is, as shown in FIG. 2, a pair of heating members 1 is located on both side surfaces of an electrode assembly 10 to bond separators 13 extending outwardly of a first electrode 11 and a second electrode 12 to each other for sealing.

The side surfaces of the electrode assembly 10 may be sealed by the pair of heating members 1; however, electrolyte may not easily permeate the first electrode 11, the second electrode 12, and the separators 13.

### (Prior Art Document)

(Patent Document 1) Korean Patent Application Publication No. 10-2023-0171902

### [Disclosure]

### [Technical Problem]

The present invention has been made in view of the above problems, and it is an object of the present invention to provide a side sealing apparatus for stacked type electrode assemblies capable of fixing an end of a separator constituting a stacked type electrode assembly while maintaining excellent electrolyte impregnation properties.

### [Technical Solution]

A side sealing apparatus for stacked type electrode assemblies according to the present invention to accomplish the above object, which is a side sealing apparatus for sealing a side surface of a stacked type electrode assembly (10) having a separator (13) interposed between a first electrode (11) and a second electrode (12), includes a first sealing tool (100) located on one side surface of the stacked type electrode assembly (10) and a second sealing tool (200) located on another side surface of the stacked type electrode assembly (10), wherein at least one of the first sealing tool (100) or the second sealing tool (200) has a protruding portion and a depressed portion at an inner surface thereof configured to face the side surface of the stacked type electrode assembly (10).

Also, in the side sealing apparatus for stacked type electrode assemblies according to the present invention, each of the first sealing tool (100) and the second sealing tool (200) may have the protruding portion and the depressed portion at the inner surface thereof.

Also, in the side sealing apparatus for stacked type electrode assemblies according to the present invention, when the first sealing tool (100) and the second sealing tool (200) are located on both side surfaces of the stacked type electrode assembly (10), the inner surfaces of the first sealing tool (100) and the second sealing tool (200) may have areas that are configured to completely cover both side surfaces of the stacked type electrode assembly (10).

Also, in the side sealing apparatus for stacked type electrode assemblies according to the present invention, the inner surface of the first sealing tool (100) may have a plurality of first bar-shaped protruding portions (110) protruding continuously in a height direction and at least one first depressed portion (120) located between the first protruding portions (11).

Also, in the side sealing apparatus for stacked type electrode assemblies according to the present invention, the inner surface of the first sealing tool (100) may have a plurality of first cylindrical protruding portions (110) protruding toward the side surface of the stacked type electrode assembly (10) in a state of being spaced apart from each other by a predetermined distance in the height direction and a longitudinal direction, and the inner surface of the first sealing tool (100) may have a first depressed portion (120) located between the first protruding portions (110).

Also, in the side sealing apparatus for stacked type electrode assemblies according to the present invention, the inner surface of the first sealing tool (100) may have a plurality of first conical protruding portions (110) protruding toward the side surface of the stacked type electrode assembly (10) in a state of being spaced apart from each other by a predetermined distance in the height direction and the longitudinal direction, and the inner surface of the first sealing tool (100) may have a first depressed portion (120) located between the first protruding portions (110).

Also, in the side sealing apparatus for stacked type electrode assemblies according to the present invention, the first depressed portion (120) may be located so as to surround the first protruding portions (110).

Also, in the side sealing apparatus for stacked type electrode assemblies according to the present invention, the inner surface of the second sealing tool (200) may have a plurality of second bar-shaped protruding portions (210) protruding continuously in the height direction and at least one second depressed portion (220) located between the second protruding portions (210).

Also, in the side sealing apparatus for stacked type electrode assemblies according to the present invention, the inner surface of the second sealing tool (200) may have a plurality of second cylindrical protruding portions (210) protruding toward the side surface of the stacked type electrode assembly (10) in a state of being spaced apart from each other by a predetermined distance in the height direction and the longitudinal direction, and the inner surface of the second sealing tool (200) may have a second depressed portion (220) located between the second protruding portions (210).

Also, in the side sealing apparatus for stacked type electrode assemblies according to the present invention, the inner surface of the second sealing tool (200) may have a plurality of second conical protruding portions (210) protruding toward the side surface of the stacked type electrode assembly (10) in a state of being spaced apart from each other by a predetermined distance in the height direction and the longitudinal direction, and the inner surface of the second sealing tool (200) may have a second depressed portion (220) located between the second protruding portions (210).

Also, in the side sealing apparatus for stacked type electrode assemblies according to the present invention, the second depressed portion (220) may be located so as to surround the second protruding portions (210).

### [Advantageous Effects]

In a side sealing apparatus for stacked type electrode assemblies according to the present invention, each of a pair of sealing tools located on side surfaces of a stacked type electrode assembly is provided at an inner surface thereof with a protruding portion and a depressed portion, whereby both a sealed portion and an unsealed portion are formed at the side surfaces of the electrode assembly, which may contribute to manufacturing a stacked type electrode assembly with excellent electrolyte impregnation while preventing peeling of an end of a separator constituting the stacked type electrode assembly.

### [Description of Drawings]

FIG. 1 is a conceptual view of a stacked type electrode assembly.
FIG. 2 is a conceptual view of a conventional sealing apparatus for stacked type electrode assemblies.
FIG. 3 is a conceptual view of a side sealing apparatus for stacked type electrode assemblies according to a first embodiment of the present invention.
FIG. 4 is an enlarged view of the side sealing apparatus shown in FIG. 3.
FIG. 5 is a top view of the side sealing apparatus shown in FIG. 3.
FIG. 6 is a front view of the side sealing apparatus shown in FIG. 3.
FIG. 7 is a view illustrating a stacked type electrode assembly after sealing using the side sealing apparatus shown in FIG. 3.
FIG. 8 is a conceptual view of a side sealing apparatus for stacked type electrode assemblies according to a second embodiment of the present invention.
FIG. 9 is a view illustrating a stacked type electrode assembly after sealing using the side sealing apparatus shown in FIG. 8.
FIG. 10 is a conceptual view of a side sealing apparatus for stacked type electrode assemblies according to a third embodiment of the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a side sealing apparatus for stacked type electrode assemblies according to the present invention will be described.

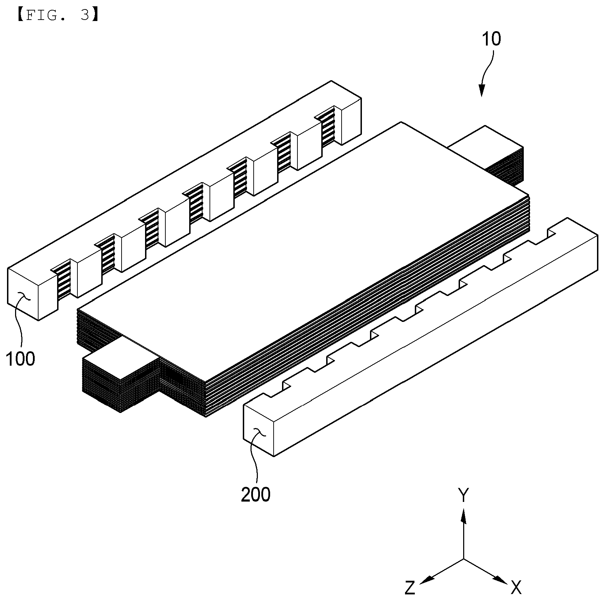

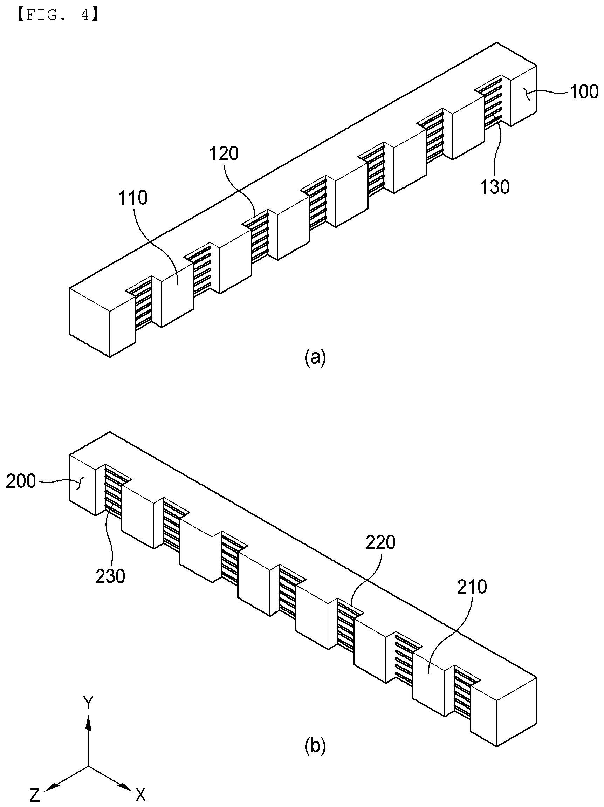

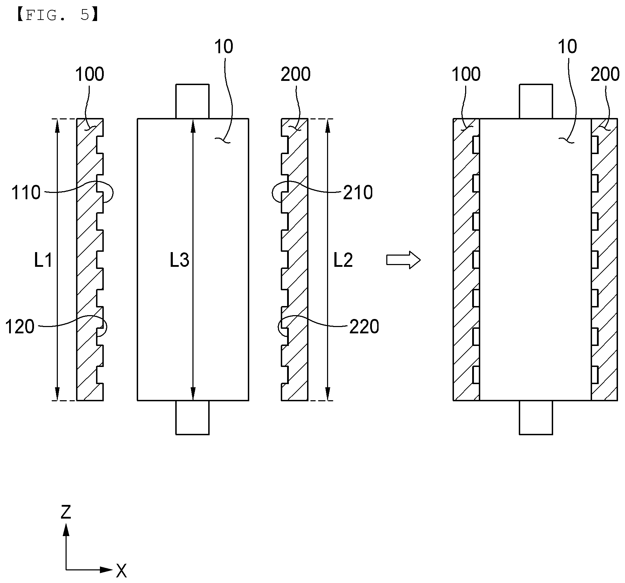

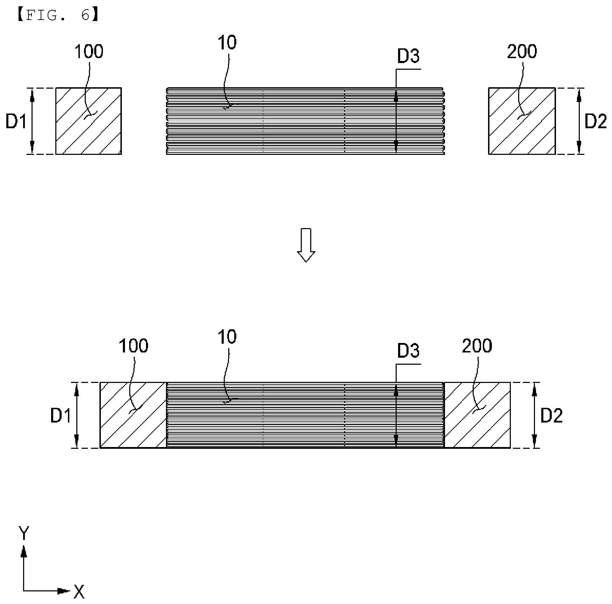

FIG. 3 is a conceptual view of a side sealing apparatus for stacked type electrode assemblies according to a first embodiment of the present invention, and FIG. 4 is an enlarged view of the side sealing apparatus shown in FIG. 3. In addition, FIG. 5 is a top view of the side sealing apparatus shown in FIG. 3, and FIG. 6 is a front view of the side sealing apparatus shown in FIG. 3.

Referring to FIGs. 1 and 3 to 5, the side sealing apparatus for stacked type electrode assemblies according to the first embodiment of the present invention may include a first sealing tool 100 and a second sealing tool 200 located respectively on both side surfaces of an electrode assembly 10.

The electrode assembly 10 is a stacked type electrode assembly in which a separator 13 is disposed between a first electrode 11 and a second electrode 13 in a zigzag pattern.

For example, the stacked type electrode assembly may be configured such that a separator 13 is located at the lowermost position and a first electrode 11, which is a negative electrode, a separator 13, and a second electrode 12, which is a positive electrode, are repeatedly disposed.

In another example, the stacked type electrode assembly may be configured such that a plurality of monocells, each of which includes a separator 13, a first electrode 11, which is a negative electrode, a separator 13, and a second electrode 12, which is a positive electrode, stacked from the bottom in that order, is stacked and a single half-cell including a separator 13, a first electrode 11, and a separator 13 stacked in that order is located at the uppermost position; however, the present invention is not necessarily limited thereto.

The first electrode 11, which is the negative electrode, includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The second electrode 12, which is the positive electrode, includes a positive electrode current collector and a positive electrode active material applied to each of an upper surface and a lower surface of the positive electrode current collector. The positive electrode active material may be mixed with a conductive agent and a binder, and a filler may be further added if necessary.

The separator 13 prevents short circuit between the first electrode 11 and the second electrode 12 and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The first electrode 11, the separator 13, and the second electrode 12 are known in the art, and therefore a more detailed description thereof will be omitted.

The first sealing tool 100 is located on one side surface of the stacked type electrode assembly 10, and includes a first protruding portion 110, a first depressed portion 120, and a first heating means 130. Specifically, the external shape of the first sealing tool is an approximately long hexahedral shape, and the first protruding portion 110 and the first depressed portion 120 are provided at an inner surface of the first sealing tool, namely, the surface of the first sealing tool facing one side surface of the stacked type electrode assembly 10.

In a side sealing step, the first protruding portion 110 is a part that is heated by the first heating means 130 and performs sealing in tight contact with one side surface of the stacked type electrode assembly 10, and is formed in a bar shape protruding continuously in a height direction (Y-axis direction) of the first sealing tool 100. It is preferable for the first protruding portion 110 to be provided in plural so as to be spaced apart from each other by a predetermined distance in a longitudinal direction (Z-axis direction) of the first sealing tool 100.

Here, the first heating means 130 is not particularly limited as long as it is possible to heat the first sealing tool 100. In an example, the first heating means may be a heating coil, and may be received in the first sealing tool 100.

The first depressed portion 120 is located between the first protruding portions 110, and is formed in a bar shape depressed continuously in the height direction (Y-axis direction) of the first sealing tool 100. It is preferable for the first depressed portion 120 to be provided in plural so as to be spaced apart from each other by a predetermined distance in the longitudinal direction (Z-axis direction) of the first sealing tool 100.

In the side sealing step, the first depressed portion 120 is not in tight contact with one side surface of the stacked type electrode assembly 10 due to depression thereof, unlike the first protruding portion 110, and therefore the part of the stacked type electrode assembly facing the first depressed portion 120 is not sealed and may function as a passageway for electrolyte movement.

The second sealing tool 200 is located on the other side surface of the stacked type electrode assembly 10, and includes a second protruding portion 210, a second depressed portion 220, and a second heating means 230. Specifically, the exterior of the second sealing tool has a long, approximately hexahedral shape, and the second protruding portion 210 and the second depressed portion 220 are provided at an inner surface of the second sealing tool, namely, the surface of the second sealing tool facing the other side surface of the stacked type electrode assembly 10.

In the side sealing step, the second protruding portion 210 is a part that is heated by the second heating means 230 and performs sealing in tight contact with the other side surface of the stacked type electrode assembly 10, and is formed in a bar shape protruding continuously in a height direction (Y-axis direction) of the second sealing tool 200. It is preferable for the second protruding portion 210 to be provided in plural so as to be spaced apart from each other by a predetermined distance in a longitudinal direction (Z-axis direction) of the second sealing tool 200.

Here, the second heating means 230 is not particularly limited as long as it is possible to heat the second sealing tool 200. In an example, the second heating means may be a heating coil, and may be received in the second sealing tool 200.

The second depressed portion 220 is located between the second protruding portions 210, and is formed in a bar shape depressed continuously in the height direction (Y-axis direction) of the second sealing tool 200. It is preferable for the second depressed portion 220 to be provided in plural so as to be spaced apart from each other by a predetermined distance in the longitudinal direction (Z-axis direction) of the second sealing tool 200.

In the side sealing step, the second depressed portion 220 is not in tight contact with the other side surface of the stacked type electrode assembly 10 due to depression thereof, unlike the second protruding portion 210, and therefore the part of the stacked type electrode assembly facing the second depressed portion 220 is not sealed and may function as a passageway for electrolyte movement.

Meanwhile, it is preferable for each of the inner surfaces of the first sealing tool 100 and the second sealing tool 200, namely, each of the surface of the first sealing tool 100 provided with the first protruding portion 110 and the first depressed portion 120 and the surface of the second sealing tool 200 provided with the second protruding portion 210 and the second depressed portion 220, to have a width capable of completely covering a corresponding one of the side surfaces of the stacked type electrode assembly 10.

For example, as shown in FIGs. 5 and 6, it is preferable for the height D1 of the first sealing tool and the height D2 of the second sealing tool to be equal to or greater than the thickness D3 of the electrode assembly and for the length L1 of the first sealing tool and the length L2 of the second sealing tool to be equal to or greater than the length L3 of the electrode assembly.

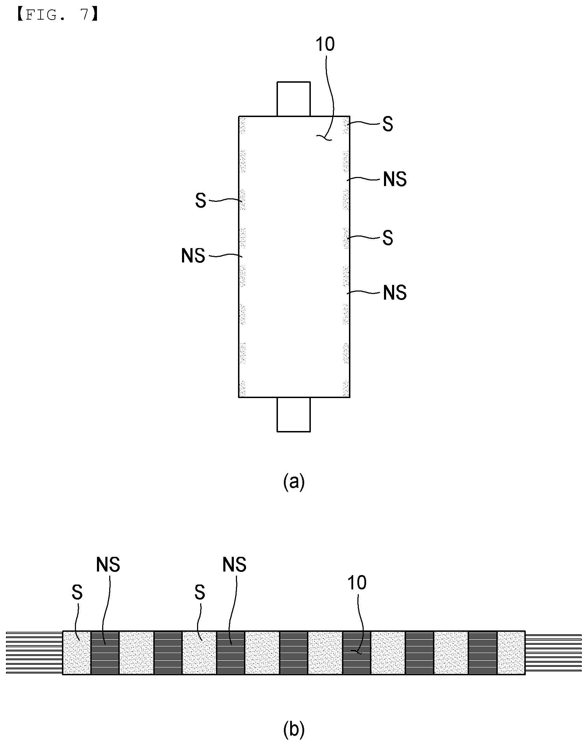

FIG. 7 is a view illustrating the stacked type electrode assembly after sealing using the side sealing apparatus shown in FIG. 3.

When sealing the side surfaces of the stacked type electrode assembly 10 using the side sealing apparatus according to the first embodiment described with reference to FIGs. 3 to 6, the separators of the parts of the stacked type electrode assembly in tight contact with the first protruding portion 110 and the second protruding portion 210 are melted to form a sealed portion S, as shown in FIG. 7. However, the separators of the parts of the stacked type electrode assembly facing the first depressed portion 120 and the second depressed portion 220 remain as an unsealed portion NS because sufficient heat to melt the separators is not applied to the separators.

When the stacked type electrode assembly 10 is received in a cell case (not shown) and electrolyte is injected into the cell case, therefore, the electrolyte may easily move through the unsealed portion NS of the stacked type electrode assembly 10, whereby the electrode assembly may be sufficiently impregnated with the electrolyte.

Meanwhile, although not shown in the figures, it is obvious that a process of sealing the stacked type electrode assembly in a vertical direction can be performed using a sealing apparatus (not shown) configured to heat and press an upper surface of the stacked type electrode assembly, and side sealing may be performed after vertical sealing, or both processes may be performed simultaneously.

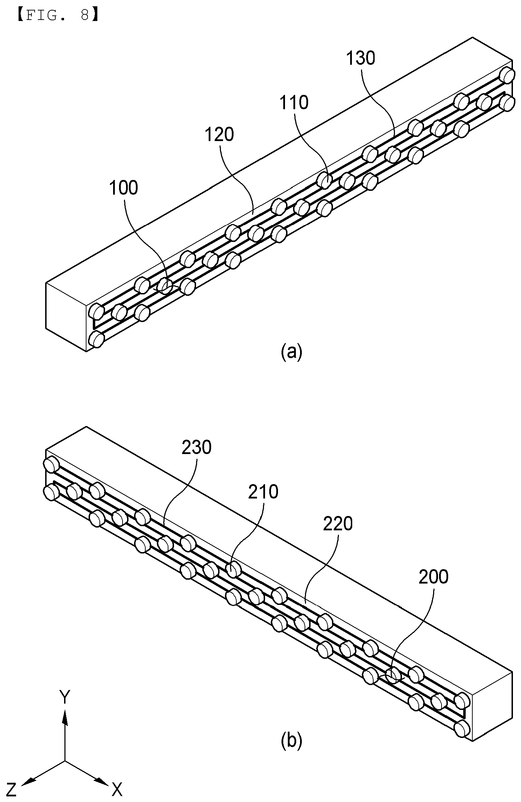

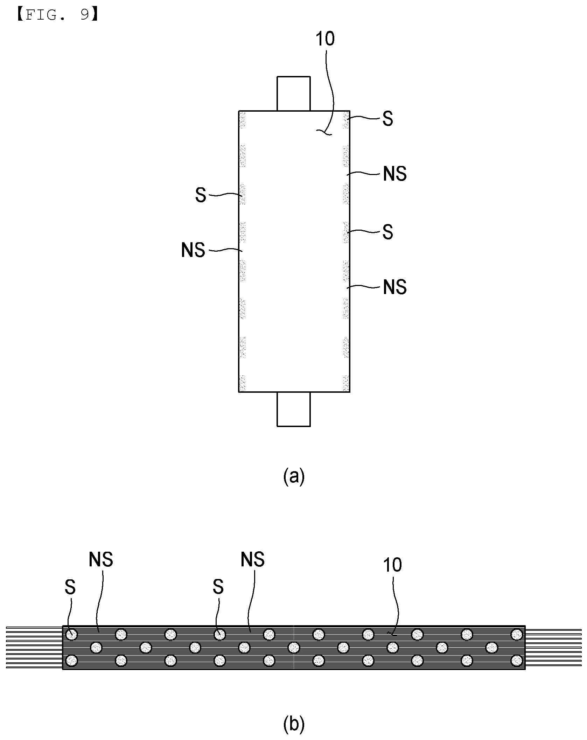

FIG. 8 is a conceptual view of a side sealing apparatus for stacked type electrode assemblies according to a second embodiment of the present invention, and FIG. 9 is a view illustrating a stacked type electrode assembly after sealing using the side sealing apparatus shown in FIG. 8.

The side sealing apparatus for stacked type electrode assemblies according to the second embodiment of the present invention is identical to the side sealing apparatus according to the first embodiment except for the shape of a protruding portion and a depressed portion, and therefore only a different configuration will hereinafter be described.

In the side sealing apparatus for stacked type electrode assemblies according to the second embodiment, a first protruding portion 110 located on an inner surface of a first sealing tool 100 may be provided in plural so as to be spaced apart from each other by a predetermined distance in the height direction (Y-axis direction) and the longitudinal direction (Z-axis direction).

Here, each of the first protruding portions 110 is formed in a cylindrical shape protruding in a direction facing one side surface of a stacked type electrode assembly 10.

A first depressed portion 120 is a part that surrounds the first protruding portion 110, i.e., the remaining part excluding the first protruding portion 110.

In addition, a second protruding portion 210 located on an inner surface of a second sealing tool 200 may be provided in plural so as to be spaced apart from each other by a predetermined distance in the height direction (Y-axis direction) and the longitudinal direction (Z-axis direction).

In the same manner as the first protruding portion 110, each of the second protruding portions 210 is formed in a cylindrical shape protruding in a direction facing the other side surface of the stacked type electrode assembly 10.

A second depressed portion 220 is a part that surrounds the second protruding portion 210, i.e., the remaining part excluding the second protruding portion 210.

When sealing the side surfaces of the stacked type electrode assembly 10 using the side sealing apparatus according to the second embodiment, the separators of the parts of the stacked type electrode assembly in tight contact with the first protruding portion 110 and the second protruding portion 210 are melted to form a sealed portion S, as shown in FIG. 9. However, the separators of the parts of the stacked type electrode assembly facing the first depressed portion 120 and the second depressed portion 220 remain as an unsealed portion NS because sufficient heat to melt the separators is not applied to the separators.

Particularly, since the first protruding portions 110 and the second protruding portions 210 are located spaced apart from each other by the predetermined distance in the height direction (Y-axis direction) and the longitudinal direction (Z-axis direction) of the sealing tool, electrolyte injected into a cell case (not shown) may move through a plurality of paths, making impregnation of the electrode assembly more advantageous.

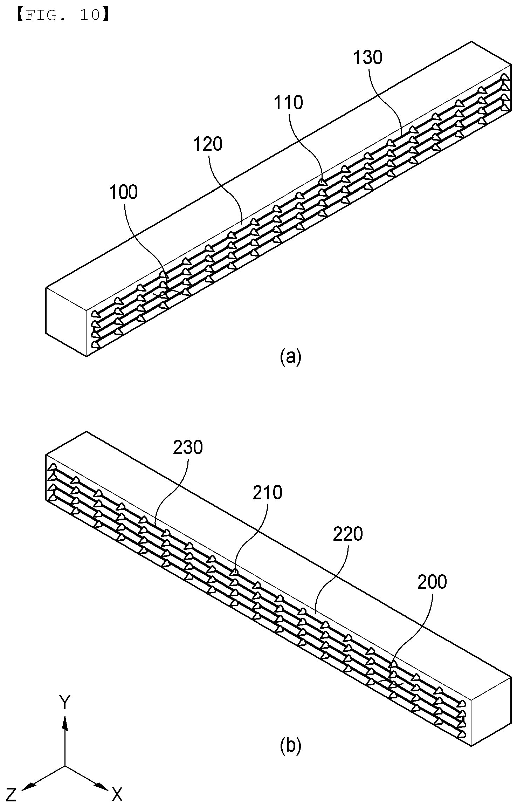

FIG. 10 is a conceptual view of a side sealing apparatus for stacked type electrode assemblies according to a third embodiment of the present invention.

The side sealing apparatus for stacked type electrode assemblies according to the third embodiment of the present invention is identical to the side sealing apparatus according to the second embodiment except for the shape of a protruding portion and a depressed portion, and therefore only a different configuration will hereinafter be described.

In the side sealing apparatus for stacked type electrode assemblies according to the third embodiment, each first protruding portion 110 located on an inner surface of a first sealing tool 100 is formed in a conical shape protruding in a direction facing one side surface of a stacked type electrode assembly 10.

In the same manner as the first protruding portion 110, each second protruding portion 210 is also formed in a conical shape protruding in a direction facing the other side surface of the stacked type electrode assembly 10.

A side sealing method for stacked type electrode assemblies according to the present invention includes a first step of preparing a stacked type electrode assembly and a second step of locating a pair of sealing tools on both side surfaces of the prepared stacked type electrode assembly and sealing both side surfaces thereof.

In the second step, the pair of sealing tools may be in tight contact with both side surfaces of the stacked type electrode assembly in a state of being heated to a certain temperature, or the pair of sealing tools may be heated to a certain temperature after the pair of sealing tools is in tight contact with both side surfaces of the stacked type electrode assembly.

In addition, a step of heating and pressing an upper surface of the stacked type electrode assembly may be further performed before the second step, simultaneously with the second step, or after the second step.

Meanwhile, the stacked type electrode assembly obtained through the aforementioned process is received in a battery case provided with a pocket portion, electrolyte is injected into the battery case, and a charging and discharging process is performed, whereby a pouch-type battery cell is manufactured.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Stacked type electrode assembly
11: First electrode 12: Second electrode
13: Separator
100: First sealing tool
110: First protruding portion
120: First depressed portion
130: First heating means
200: Second sealing tool
210: Second protruding portion
220: Second depressed portion
230: Second heating means
S: Sealed portion
NS: Unsealed portion
D1: Height of first sealing tool
D2: Height of second sealing tool
D3: Thickness of electrode assembly
L1: Length of first sealing tool
L2: Length of second sealing tool
L3: Length of electrode assembly

## Claims

1. A side sealing apparatus for stacked type electrode assemblies for sealing a side surface of a stacked type electrode assembly having a separator interposed between a first electrode and a second electrode, the side sealing apparatus comprising:
a first sealing tool located on one side surface of the stacked type electrode assembly; and
a second sealing tool located on another side surface of the stacked type electrode assembly, wherein
at least one of the first sealing tool or the second sealing tool has a protruding portion and a depressed portion at an inner surface thereof configured to face the side surface of the stacked type electrode assembly.

2. The side sealing apparatus according to claim 1, wherein each of the first sealing tool and the second sealing tool has the protruding portion and the depressed portion at the inner surface thereof.

3. The side sealing apparatus according to claim 2, wherein, when the first sealing tool and the second sealing tool are located on both side surfaces of the stacked type electrode assembly, the inner surfaces of the first sealing tool and the second sealing tool have areas that are configured to completely cover both side surfaces of the stacked type electrode assembly.

4. The side sealing apparatus according to claim 3, wherein the inner surface of the first sealing tool has a plurality of first bar-shaped protruding portions protruding continuously in a height direction and at least one first depressed portion located between the first protruding portions.

5. The side sealing apparatus according to claim 3, wherein the inner surface of the first sealing tool has a plurality of first cylindrical protruding portions protruding toward the side surface of the stacked type electrode assembly in a state of being spaced apart from each other by a predetermined distance in a height direction and a longitudinal direction, and the inner surface of the first sealing tool has a first depressed portion located between the first protruding portions.

6. The side sealing apparatus according to claim 3, wherein the inner surface of the first sealing tool has a plurality of first conical protruding portions protruding toward the side surface of the stacked type electrode assembly in a state of being spaced apart from each other by a predetermined distance in a height direction and a longitudinal direction, and the inner surface of the first sealing tool has a first depressed portion located between the first protruding portions.

7. The side sealing apparatus according to claim 5 or 6, wherein the first depressed portion is located so as to surround the first protruding portions.

8. The side sealing apparatus according to claim 3, wherein the inner surface of the second sealing tool has a plurality of second bar-shaped protruding portions protruding continuously in a height direction and at least one second depressed portion located between the second protruding portions.

9. The side sealing apparatus according to claim 3, wherein the inner surface of the second sealing tool has a plurality of second cylindrical protruding portions protruding toward the side surface of the stacked type electrode assembly in a state of being spaced apart from each other by a predetermined distance in a height direction and a longitudinal direction, and the inner surface of the second sealing tool has a second depressed portion located between the second protruding portions.

10. The side sealing apparatus according to claim 3, wherein the inner surface of the second sealing tool has a plurality of second conical protruding portions protruding toward the side surface of the stacked type electrode assembly in a state of being spaced apart from each other by a predetermined distance in a height direction and a longitudinal direction, and the inner surface of the second sealing tool has a second depressed portion located between the second protruding portions.

11. The side sealing apparatus according to claim 9 or 10, wherein the second depressed portion is located so as to surround the second protruding portions.
